# EUROPÄISCHE PATENTSCHRIFT

(11) **EP 1 239 790 B1**
(45) Veröffentlichungstag und Bekanntmachung des Hinweises auf die Patenterteilung: **20.04.2005**
(21) Anmeldenummer: 00976218.8
(22) Anmeldetag: 04.12.2000
(51) Int. Cl.: A61C 5/12

(54) **ATRAUMATISCHER APPROXIMALRAUMERWEITERER**
ATRAUMATIC APPROXIMAL SPACE DILATOR
DILATATEUR D'ESPACE APPROXIMAL ATRAUMATIQUE

(30) Priorität: 24.12.1999 CH 237999
(43) Veröffentlichungstag der Anmeldung: 18.09.2002
(73) Patentinhaber: Ivoclar Vivadent AG, 9494 Schaan (LI)
(72) Erfinder: BESEK, Mario, CH-8800 Thalwil (CH)
(74) Vertreter: Blum, Rudolf Emil Ernst
(86) Internationale Anmeldenummer: PCT/IB2000/001788
(87) Internationale Veröffentlichungsnummer: WO 2001/047428

(56) Entgegenhaltungen:
- EP-A- 0 910 996
- US-A- 1 456 294
- US-A- 1 464 532
- US-A- 1 702 869
- US-A- 4 718 852
- US-A- 5 993 210

## Beschreibung

### TECHNISCHES GEBIET

Die Erfindung betrifft das Gebiet der zahnmedizinischen Apparaturen. Sie geht aus von einem Dentalgerät zur Erweiterung von Zahnzwischenräumen nach dem Oberbegriff des unabhängigen Anspruchs. Ein solches Gerät ist aus US-A-4 718 852 bekannt.

### STAND DER TECHNIK

Im Stand der Technik sind derartige Approximalraumerweiterer in Form von Keilen bekannt. Der Keil wird zwischen zwei benachbarte Zähne eingeführt und treibt diese durch manuelle Kraft auseinander. Aus der U. S. Pat. No. 5,573,400 ist ein Keil zur Fixierung einer Matrize für Zahnpräparationszwecke bekannt. Nach Plazierung der Matrize wird der Keil eingeführt und presst die Matrize durch feuchtigkeitsbedingtes Aufquellen gegen den zu präparierenden Zahn.

In allen Fällen wird der Keil zwischen unmittelbar benachbarte Zähne eingeführt, übt eine Kraft zwischen diesen aus und treibt sie gegebenenfalls auseinander. Der Keil verdeckt dabei Teile der Zahnseitenflächen, die dann nicht mehr für Behandlungszwecke zugänglich sind. Zudem ist die Verwendung von Keilen problematisch, weil Keilkanten zu Zahnfleischverletzungen und Drucküberhöhungen durch kleine Anliegeflächen an den Zähnen zu Schädigungen des Zahnschmelzes führen können.

### DARSTELLUNG DER ERFINDUNG

Die Erfindung stellt sich die Aufgabe, ein Dentalgerät zur Approximalraumerweiterung anzugeben, das weitgehend atraumatisch ist und einen verbesserten Zugang zum Approximalraum ermöglicht. Diese Aufgabe wird erfindungsgemäss durch die Merkmale des unabhängigen Anspruchs gelöst.

Das erfindungsgemässe Dentalgerät umfasst zwei Interdentalmatrizen, zwei Haltemittel zur deren Halterung und eine Abstandsvorrichtung zum Auseinanderstossen und Parallelführen der Haltemittel, wobei an der Abstandsvorrichtung ein Abstand zwischen den Interdentalmatrizen in einem Bereich von mindestens einer Zahnlänge bis zu einer Spreizlänge grösser als eine Zahnlänge einstellbar ist. Interdentalmatrizen sind sehr einfach und verletzungsfrei in Zahnzwischenräume einführbar. Die Abstandsvorrichtung ist derart längenanpassbar, dass zunächst keine Kraft zwischen den Haltemitteln wirkt. Mit Hilfe der Abstandsvorrichtung sind die Haltemittel und Interdentalmatrizen im wesentlichen parallel zueinander auseinanderdrückbar. Die Interdentalmatrizen sind flexibel und damit so weit an die Zahnform anpassungsfähig, dass die Kraft schonend über eine grosse, gleichmässig belastete Fläche auf die Zähne übertragen werden kann. Die Abstandsvorrichtung weist typischerweise eine Länge zur Überbrückung eines Zahns auf. Dadurch sind die Zwischenräume zu den Nachbarzähnen für prophylaktische, präparative oder andere Zwecke erweiterbar. Die Abstandsvorrichtung kann aber auch eine Länge zur Überbrückung mehrerer Zähne haben, so dass das Dentalgerät bei Zahnlücken, schonungsbedürftigen Nachbarzähnen u. ä. anwendbar ist.

Erste Beispiele betreffen Ausführungsformen der Interdentalmatrizen. Durch Haltemittel mit lösbaren Befestigungen, z. B. Klemmbacken und Fixierschrauben oder Einschubschlitze, für die Interdentalmatrizen können Matrizen bei Bedarf sehr einfach ausgetauscht werden. Mit massiven Interdentalmatrizen steht eine grösstmögliche Zahnfläche zur Kraftübertragung auf den wegzustossenden Zahn zur Verfügung. Mit gefensterten Interdentalmatrizen ist auch die Seitenfläche des wegzustossenden Zahns für Zahnbehandlungen zugänglich. An einer Interdentalmatrize kann auch eine zusätzliche Teilmatrize befestigt sein, die als Modellierhilfe oder Separationsfolie bei der Präparation des anliegenden Zahns dient.

Zweite Ausführungsbeispiele betreffen Haltemittel in der Gestalt U-förmiger Träger mit einer Basis und seitlichen Befestigungsmitteln zur Aufnahme der Interdentalmatrizen. Bevorzugt weist die Basis eine Auflagefläche und/oder einen Vorsprung zur Abstützung der Interdentalmatrizen auf. Diese Art der Halterung gewährleistet eine einfache Einschiebbarkeit der Interdentalmatrizen in Zahnzwischenräume und zugleich eine wirksame Kraftübertragung auf die Haltemittel, Interdentalmatrizen und Zähne.

Dritte Ausführungsbeispiele betreffen Abstandsvorrichtungen mit Separationsschrauben und Führungsstiften. Vorzugsweise sind zwei Separationsschrauben mit endseitig einstückig integrierten Führungstiften beidseits symmetrisch von den Interdentalmatrizen angeordnet. Dadurch ist die Konstruktion des Dentalgeräts sehr einfach und der Zugang zum Zahnzwischenraum ist kaum eingeschränkt.

Weitere Ausführungen, Vorteile und Anwendungen der Erfindung ergeben sich aus den abhängigen Ansprüchen sowie aus der nun folgenden Beschreibung anhand der Figuren.

### KURZE BESCHREIBUNG DER ZEICHNUNGEN

- Fig. 1a: zeigt ein erstes erfindungsgemässes Dentalgerät zur Approximalraumerweiterung in Draufsicht und Fig. 1b in Vorderansicht;
- Fig. 2a: zeigt ein zweites erfindungsgemässes Dentalgerät zur Approximalraumerweiterung in Draufsicht und Fig. 2b in Vorderansicht;
- Fig. 3: zeigt eine alternative Befestigung einer Interdentalmatrize; und
- Fig. 4: zeigt ein Ausführungsbeispiel mit einer zweiflügeligen Interdentalmatrize zur Zahnbehandlung.

In den Figuren sind gleiche Teile mit gleichen Bezugszeichen versehen.

### WEGE ZUR AUSFÜHRUNG DER ERFINDUNG

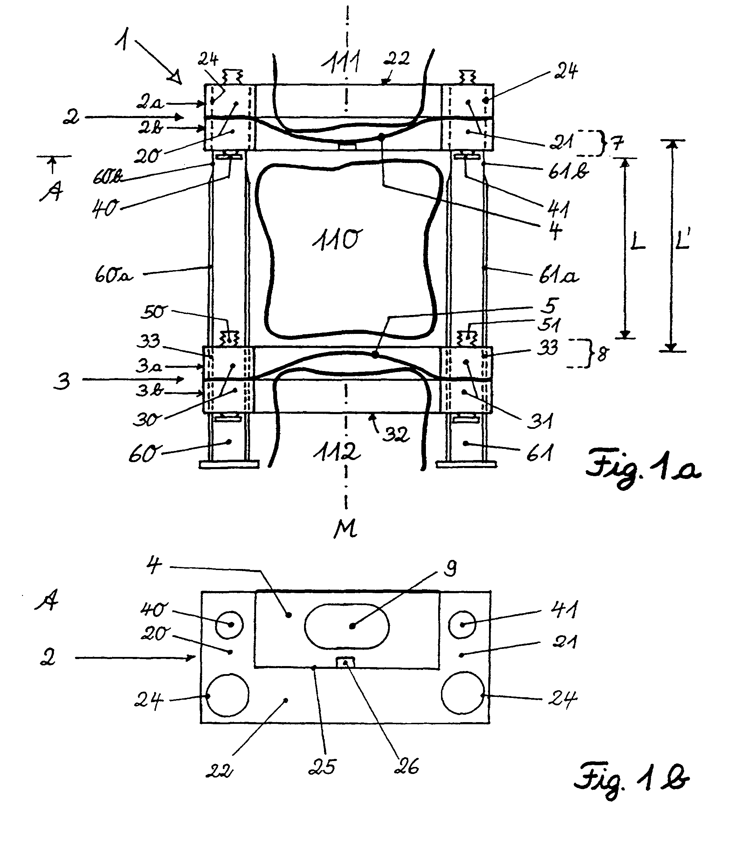

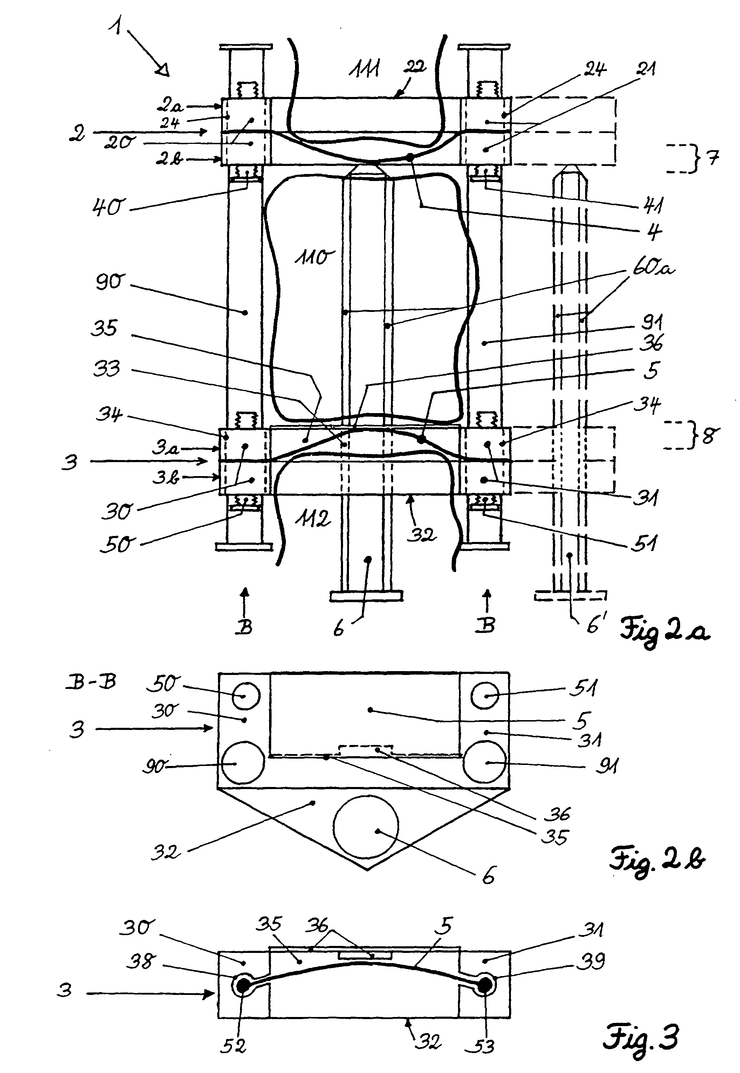

Gemäss den Fig. 1a, 1b, 2a, 2b und 3 ist das erfindungsgemässe Dentalgerät 1 zur Erweiterung eines Approximalraums 7, 8 zwischen Zähnen 110, 111, 112 gekennzeichnet durch zwei Interdentalmatrizen 4, 5 zum Einführen in Approximalräume 7, 8, zwei Haltemittel 2, 3 zur Halterung von Interdentalmatrizen 4, 5 und eine Abstandsvorrichtung 6, 6', 60, 61, 60b, 61b, 90, 91 zum Auseinanderstossen und Parallelführen der Haltemittel 2, 3. An der Abstandsvorrichtung 6, 6', 60, 61, 60b, 61b, 90, 91 ist ein Abstand zwischen den Interdentalmatrizen 4, 5 in einem Bereich von mindestens einer bis zu mehr als einer Zahnlänge L einstellbar. Im folgenden werden einige Ausführungsbeispiele angegeben.

Die Interdentalmatrizen 4, 5 können an den Haltemitteln 2, 3 lösbar befestigt sein. Dadurch sind abgenutzte Matrizen 4, 5 oder Matrizen 4, 5 für spezielle Anwendungen, z. B. solche aus unterschiedlichem Material, mit unterschiedlicher Dicke oder von unterschiedlicher Gestalt, einfach und auch während des Betriebs des Dentalgeräts 1 austauschbar. Die Interdentalmatrizen 4, 5 sind i. a. massiv. Zur Verbesserung der Stabilität gegen Durchbiegung können sie z. B. einen verstärkten Rahmen haben. Es kann auch ein Fenster 9 vorgesehen sein, welches für Licht einer Polymerisationslampe und/oder für den optischen Bereich transparent ist. Beispielsweise ist das Fenster 9 ein Kunststofffenster 9 oder eine Öffnung 9. Das Fenster 9 kann zentral oder anderweitig angeordnet sein. Durch das Fenster 10 kann eine zahnärztliche Behandlung, z. B. eine Lichthärtung, eine Versiegelung o. ä. erfolgen.

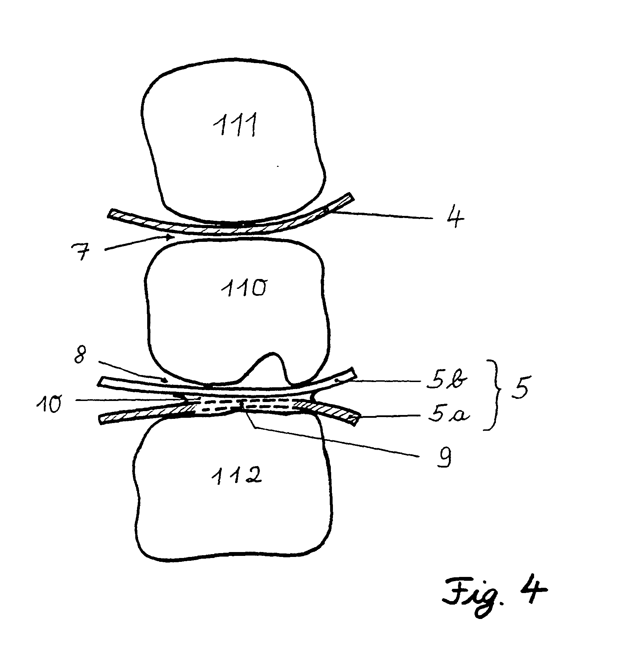

Eine weitere Variante der Interdentalmatrizen 4, 5 ist in Fig. 4 gezeigt. Hier umfasst die Interdentalmatrize 5 zwei Teilmatrizen 5a, 5b, von denen eine erste Teilmatrize 5a an einem Haltemittel 3 (nicht dargestellt) gehaltert ist und eine zweite Teilmatrize 5b an der ersten Teilmatrize 5a gehaltert ist. Die Teilmatrizen 5a, 5b können durch Klebstoff miteinander verbunden sein. Die erste Teilmatrize 5a dient wie zuvor zur Kraftübertragung auf den wegzustossenden Zahn 112. Die zweite Teilmatrize 5b hingegen wirkt als Modellierhilfe oder Separationsfolie bei der Behandlung des anliegenden Zahns 110. Mit Vorteil weisen beide Teilmatrizen 5a, 5b ein gemeinsames Fenster 9 auf. Beispielsweise haben beide Teilmatrizen überlappende Öffnungen 9. Alternativ kann, wie in Fig. 4 gezeigt, die Teilmatrize 5a eine Öffnung 9 haben und die Teilmatrize 5b aus Kunststoff bestehen, der im gewünschten Längenbereich transparent ist. Auch andere Kombinationen, z. B. zwei Teilmatrizen 5a, 5b aus Kunststof, sind denkbar. Wichtig ist die optische und/oder mechanische Zugänglichkeit des zu behandelnden Teils des Zahnes 110 im Bereich des Zahnzwischenraums 8.

Fig. 1a, 1b, Fig. 2a, 2b und Fig. 3 zeigen als Haltemittel 2, 3 U-förmige Träger 2, 3, die eine Basis 22, 32 und zwei Seitenteile mit Befestigungsmitteln 20, 21, 30, 31, 40, 41, 50, 51; 38, 39 für die Interdentalmatrizen 4, 5 umfasst. Mit Vorteil weist die Basis 22, 32 eine Auflagefläche 25, 35 zur seitlichen oder unteren randseitigen Abstützung der Interdentalmatrizen 4, 5 auf. Alternativ oder ergänzend weist die Basis 22, 32 einen Vorsprung 26, 36 zur vorder- oder rückseitigen Abstützung der Interdentalmatrizen 4, 5 gegen eine Durchbiegung beim Auseinanderstossen der Haltemittel 2, 3 auf.

Bei den Befestigungsmitteln 20, 21, 30, 31, 40, 41, 50, 51 kann es sich um Klemmbacken 20, 21, 30, 31 mit Fixierschrauben 40, 41, 50, 51 zum Eingreifen in Perforationen der Interdentalmatrizen 4, 5 handeln. Insbesondere bestehen die U-förmigen Träger 2, 3 jeweils aus zwei U-förmigen Teilträgern 2a, 2b; 3a, 3b, deren Seitenteile oder Arme die Klemmbacken 20, 21, 30, 31 bilden.

Die Abstandsvorrichtung 6, 6', 60, 61, 60b, 61b, 90, 91 kann mindestens eine Separationsschraube 6, 6', 60, 61 und mindestens einen Führungsstift 60b, 61b, 90, 91 umfassen und die Haltemittel 2, 3 mindestens eine Gewindebohrung 33 für die Separationsschraube 6, 6', 60, 61 und mindestens eine Führungsbohrung 24, 34 für den Führungsstift 60b, 61b, 90, 91.

Im Ausführungsbeispiel nach Fig. 1a und Fig. 1b umfasst die Abstandsvorrichtung 60, 61, 60b, 61b zwei Separationsschrauben 60, 61, die endseitig mit je einem Führungsstift 60b, 61b einstückig verbunden sind. Ein erstes der Haltemittel 3 weist zwei Gewindebohrungen 33 für die Separationsschrauben 60, 61 oder deren Gewinde 60a, 61a und ein zweites der Haltemittel 2 zwei Führungsbohrungen 24 für die Führungsstifte 60b, 61b auf.

Im Ausführungsbeispiel nach Fig. 2a und Fig. 2b umfasst die Abstandsvorrichtung 6, 6', 90, 91 genau eine zentrale Separationsschraube 6 und zwei seitliche Führungsstifte 90, 91. Die Anordnung der Separationsschraube 6, 6' und der Führungsstifte 90, 91 kann variieren. Insbesondere kann die Separationsschraube 6', wie gestrichelt angedeutet, auch seitlich angeordnet sein.

Alternativ kann die Abstandsvorrichtung 6, 6', 60, 61, 60b, 61b, 90, 91 auch zwei Separationsschrauben 60, 61; 6, 6' und genau einen Führungsstift 90; 91 umfassen. Kombinationen von mehreren Separationsschrauben 60, 61, 6, 6' mit mehreren Führungsstiften 60b, 61b, 90, 91 sind ebenfalls möglich.

Vorteilhafterweise ist die Abstandsvorrichtung 6, 6', 60, 61, 60b, 61b, 90, 91 bezüglich der Interdentalmatrizen 4, 5 symmetrisch angeordnet, d. h. dass sie bezüglich einer beiden Haltemitteln 2, 3 gemeinsamen Symmetrieebene M spiegelsymmetrisch ausgelegt ist. Dadurch wird eine verkantungsfreie, parallele Verschiebbarkeit der Haltemittel 2, 3 und eine gleichmässige Belastung der Interdentalmatrizen 4, 5 über ihre ganze Fläche gewährleistet. Insbesondere sind die mindestens eine Separationsschraube 6, 60, 61 und/oder der mindestens eine Führungsstift 90, 91 und die zugehörige mindestens eine Gewindebohrung 33 und/oder die zugehörige mindestens eine Führungsbohrung 24, 34 in zentraler Position, d. h. in der Symmetrieebene M, oder in paarweise spiegelsymmetrischen Positionen zur Symmetrieebene M, d. h. in paarweise gleichen Abständen beidseits von der Symmetrieebene M, angeordnet.

Das Dentalgerät 1, insbesondere die Interdentalmatrizen 4, 5, soll oder sollen aus Stahl, Kunststoff und/oder Verbundwerkstoffen auf Kohlenfaserbasis bestehen. Das Dentalgerät 1 soll keine scharfen Kanten aufweisen und sterilisierbar sein. Bevorzugt sind Schrauben 6, 6', 60, 61, 40, 41, 50, 51 des Dentalgeräts 1 Imbusschrauben.

Fig. 3 zeigt eine alternative Ausführungsform lösbarer Befestigungsmittel 38, 39. Hierbei sind in den Seitenteilen oder Armen eines beispielhaft einteiligen Trägers 30 Einschubschlitze 38, 39 für die Interdentalmatrizen 4, 5 eingelassen. Insbesondere weist die Interdentalmatrize 5 an zwei gegenüberliegenden Kanten Verdickungen 52, 53 zur Einführung in die Einschubschlitze 38, 39 auf. Die Einschubschlitze 38, 39 können auch nicht dargestellte Schnappverschlüsse haben. Durch diese Massnahmen werden die Einsetzbarkeit und Ersetzbarkeit der Interdentalmatrizen 4, 5 auch im Betrieb nochmals vereinfacht.

Mit dem erfindungsgemässen Dentalgerät 1 kann ein zahnmedizinisches Verfahren, umfassend folgende Schritte, durchgeführt werden: Einführen des Dentalgeräts 1, wobei die Interdentalmatrizen 4, 5 in unterschiedliche Zahnzwischenräume 7, 8 geschoben werden; Auseinanderstossen der Interdentalmatrizen 4, 5 durch Erhöhen ihres Abstands an der Abstandsvorrichtung 6, 6', 60, 61, 60b, 61b, 90, 91; zahnärztliche Behandlung im Bereich eines gespreizten Zahnzwischenraums 7, 8; Entlasten der Interdentalmatrizen 4, 5 durch Verringern ihres Abstands an der Abstandsvorrichtung 6, 6', 60, 61, 60b, 61b, 90, 91; und Entfernen des Dentalgeräts 1 durch Herausziehen der Interdentalmatrizen 4, 5.

Das Einführen des Dentalgeräts 1 kann erfolgen durch: Einschieben der Interdentalmatrizen 4, 5 einzeln und Verbinden ihrer zugehörigen Haltemittel 2, 3 durch die Abstandsvorrichtung 6, 6', 60, 61, 60b, 61b, 90, 91; oder Einstellen eines Abstands von einer oder mehreren Zahnlängen zwischen den Interdentalmatrizen 4, 5 und gemeinsames Einschieben der Interdentalmatrizen 4, 5. Beim einzelnen Einschieben sind die Interdentalmatrizen 4, 5 fix in ihr Haltemittel 2, 3 eingespannt. Alternativ können die Interdentalmatrizen 4, 5 separat eingeschoben und dann die Haltemittel 2, 3 z. B. mit einem Schnappmechanismus befestigt werden. Das Einschieben geschieht beispielsweise durch eine direkt vertikale oder eine sägende Bewegung.

Das Auseinanderstossen oder Entlasten der Interdentalmatrizen 4, 5 erfolgt beispielsweise durch Drehen an der mindestens einen Separationsschraube 6, 6', 60, 61, gegebenenfalls mit einem Imbusschlüssel. Mehrere Separationsschrauben 6, 6', 60, 61 können alternierend jeweils ca. 5 Umdrehungen angezogen werden. Sobald der Patient ein merkliches Spannungsgefühl bekommt, wird eine kleine Wartezeit eingelegt und dann nochmals wenige Umdrehungen angezogen. Die erzielbare Zahnspreizung liegt in einem Bereich von ca. 0,3 mm pro Zahnzwischenraum 7, 8. In diesem Bereich sind die Zähne 110 und 112 seitlich relativ einfach beweglich.

Zusätzliche Verfahrensschritte sind u. a. zur Vor- und/oder Nachbereitung des obigen zahnmedizinischen Verfahrens möglich. Beispielsweise werden vor Einführung des Dentalgeräts 1 die Zahnzwischenräume 7, 8 gereinigt. Glatte Zahnoberflächen können mit einer fluoridfreien Reinigungspaste und einem Superfloss gereinigt werden. Bei rauhen Oberflächen kann auch ein feiner Plastikstrip verwendet werden.

Die zahnmedizinische Behandlung kann beispielsweise eine prophylaktische Versiegelung einer seitlichen Zahnkontaktfläche im Bereich eines Zahnzwischenraums 7, 8 betreffen. Dabei werden an einer Kontaktfläche weiträumig für ca. 120 s Ätzgel appliziert, gegebenenfalls das Ätzgel zur besseren Benetzung der Kontaktfläche mit einer ungewachsten Zahnseide, mit Ultraschall oder anderen Hilfsmitteln verteilt und einmassiert, das Ätzgel nach der Einwirkzeit ca. 40 s mit Wasser abgesprayt, gegebenenfalls die Zahnschmelzoberfläche zusätzlich mit Aceton getrocknet, und dann der Versiegler grossflächig auf der geätzten Kontaktfläche mit einer Penetrationszeit von ca. 40 s appliziert, gegebenenfalls sanft, d. h. ohne Pooling, verblasen, und mit einem durch Lichtwellenleiter zugeführten Licht einer geeigneten Polymerisationslampe lichtgehärtet. Die Lichthärtungszeit beträgt ca. 1 Minute bei ca. 1000 mW/cm² Lichtintensität. Überschüssiges Material, welches nicht auf gehärtetem Schmelz liegt, wird anschliessend mit einem Occlubrush o. ä. entfernt. Zum Schluss können die behandelte Region und ihr Umfeld fluoriert werden.

Das Zahnbehandlungsverfahren zeichnet sich durch folgende Vorteile aus: Der Zahnzwischenraum 7, 8 kann bis hinunter zum Zahnfleisch geöffnet werden. Damit wird die zugehörige seitliche Zahnoberfläche des unbewegten Zahns 110 vollständig zugänglich gemacht, was mit Keilen unmöglich ist. Es wird atraumatisch eine grosse Öffnung erreicht, so dass die zu applizierenden Substanzen und auch Hilfsmittel zur Verbesserung der Benetzung, zahnmedizinische Werkzeuge usw. guten Zugang zur gesamten seitlichen Zahnbehandlungsfläche erhalten. Auch die gegenüberliegende Seite des weggestossenen Zahns 111, 112, an welcher eine Interdentalmatrize 4, 5 anliegt, ist für die Zahnbehandlung zugänglich, wenn eine Interdentalmatrize 4, 5 mit Fenster 9 verwendet wird.

Eine weitere zahnmedizinische Behandlung betrifft eine direkte restaurative Fülltechnik für Zähne 110, 111, 112 im Bereich eines Zahnzwischenraums 7, 8. Wie weiter oben beschrieben werden mit dem erfindungsgemässen Dentalgerät 1 ein Zahnzwischenraum 7, 8 gespreizt und dann an sich bekannte operative Verfahrenstechniken bei der Füllungstherapie angewandt.

In diesem Fall bietet das Dentalgerät 1 erhebliche Vorteile. Mit herkömmlichen Keilen ist es wegen des Schwunds des polymerischen Füllungsmaterials von ca. 2% - 3% nicht oder nur schwer möglich, einen Kontaktpunkt zwischen benachbarten Zähnen zu erzeugen. Bisher wird hilfsweise mit dem Keil eine Vorspannung erzeugt, die den Schwund kompensieren soll. Die Vorspannung ist aber praktisch kaum kontrollierbar und kann oftmals zu klein oder zu gross ausfallen. Mit dem Dentalgerät 1 ist es nun erstmals möglich, eine gut definierte Vorspannung an der Abstandsvorrichtung 6, 6', 60, 61, 60b, 61b, 90, 91 so einzustellen, dass der gewünschte Kontaktpunkt mit grosser Zuverlässigkeit erzeugt wird.

## Patentansprüche

1. Dentalgerät (1) zur Erweiterung eines Approximalraums (7, 8) zwischen Zähnen (110, 111, 112), wobei das Dentalgerät
zwei Haltemittel (2, 3) zur Halterung der Interdentalmatrizen (4, 5) und
eine Abstandsvorrichtung (6, 6', 60, 61, 60b, 61b, 90, 91) zum Auseinanderstossen und Parallelführen der Haltemittel (2, 3) aufweist,
**dadurch gekennzeichnet, daß** das Dentalgerät zwei Interdentalmatrizen (4, 5) zum Einführen in Approximalräume (7, 8) aufweist und daß an der Abstandsvorrichtung (6, 6', 60, 61, 60b, 61b, 90, 91) ein Abstand zwischen den Interdentalmatrizen (4, 5) in einem Bereich von mindestens einer Zahnlänge (L) bis zu einer Spreizlänge (L') grösser als eine Zahnlänge (L) einstellbar ist.

2. Dentalgerät (1) nach Anspruch 1, **dadurch gekennzeichnet, dass**
a) die Interdentalmatrizen (4, 5) an den Haltemitteln (2, 3) lösbar befestigt sind und/oder
b) mindestens eine Interdentalmatrize (4, 5) ein Fenster (9), insbesondere ein Kunststofffenster (9) oder eine Öffnung (9), aufweist.

3. Dentalgerät (1) nach einem der vorangehenden Ansprüche, **dadurch gekennzeichnet, dass**
a) mindestens eine Interdentalmatrize (5) zwei Teilmatrizen (5a, 5b) umfasst,
b) eine erste Teilmatrize (5a) an einem Haltemittel (3) gehaltert ist,
c) eine zweite Teilmatrize (5b) an der ersten Teilmatrize (5a) gehaltert ist und
d) insbesondere dass beide Teilmatrizen (5a, 5b) ein gemeinsames Fenster (9) aufweisen.

4. Dentalgerät (1) nach einem der vorangehenden Ansprüche, **dadurch gekennzeichnet, dass**
a) mindestens eines der Haltemittel (2, 3) ein U-förmiger Träger (2, 3) ist, der eine Basis (22, 32) und zwei Seitenteile mit Befestigungsmitteln (20, 21, 30, 31, 40, 41, 50, 51; 38, 39) für die Interdentalmatrizen (4, 5) umfasst und
b) insbesondere dass die Basis (22, 32) eine Auflagefläche (25, 35) zu einer unteren randseitigen Abstützung der Interdentalmatrizen (4, 5) aufweist und/oder die Basis (22, 32) einen Vorsprung (26, 36) zur vorder- oder rückseitigen Abstützung der Interdentalmatrizen (4, 5) gegen eine Durchbiegung beim Auseinanderstossen der Haltemittel (2, 3) aufweist.

5. Dentalgerät (1) nach Anspruch 4, **dadurch gekennzeichnet, dass**
a) die Befestigungsmittel (20, 21, 30, 31, 40, 41, 50, 51) Klemmbacken (20, 21, 30, 31) mit Fixierschrauben (40, 41, 50, 51) zum Eingreifen in Perforationen der Interdentalmatrizen (4, 5) sind und
b) insbesondere dass der U-förmige Träger (2, 3) aus zwei U-förmigen Teilträgern (2a, 2b; 3a, 3b) besteht, deren Seitenteile die Klemmbacken (20, 21, 30, 31) bilden.

6. Dentalgerät (1) nach Anspruch 4, **dadurch gekennzeichnet, dass**
a) die Seitenteile als Befestigungsmittel (38, 39) Einschubschlitze (38, 39) für die Interdentalmatrizen (4, 5) aufweisen,
b) insbesondere dass die Interdentalmatrizen (5) an zwei gegenüberliegenden Kanten Verdickungen (52, 53) zur Einführung in die Einschubschlitze (38, 39) aufweisen und
c) insbesondere dass die Einschubschlitze (38, 39) Schnappverschlüsse aufweisen.

7. Dentalgerät (1) nach einem der vorangehenden Ansprüche, **dadurch gekennzeichnet, dass**
a) die Abstandsvorrichtung (6, 6', 60, 61, 60b, 61b, 90, 91) mindestens eine Separationsschraube (6, 6', 60, 61) und mindestens einen Führungsstift (60b, 61b, 90, 91) umfasst und
b) die Haltemittel (2, 3) mindestens eine Gewindebohrung (33) für die Separationsschraube (6, 6', 60, 61) und mindestens eine Führungsbohrung (24, 34) für den Führungsstift (60b, 61b, 90, 91) aufweisen.

8. Dentalgerät (1) nach Anspruch 7, **dadurch gekennzeichnet, dass**
a) die Abstandsvorrichtung (60, 61, 60b, 61b) zwei Separationsschrauben (60, 61) umfasst, die endseitig mit je einem Führungsstift (60b, 61b) einstükkig verbunden sind und
b) ein erstes der Haltemittel (3) zwei Gewindebohrungen (33) für die Separationsschrauben (60, 61) und ein zweites der Haltemittel (2) zwei Führungsbohrungen (24) für die Führungsstifte (60b, 61b) aufweist.

9. Dentalgerät (1) nach Anspruch 7, **dadurch gekennzeichnet, dass**
a) die Abstandsvorrichtung (6, 6', 90, 91) genau eine Separationsschraube (6; 6') und zwei Führungsstifte (90, 91) umfasst oder
b) die Abstandsvorrichtung (6, 6', 60, 61, 90, 91) zwei Separationsschrauben (60, 61; 6, 6') und genau einen Führungsstift (90; 91) umfasst.

10. Dentalgerät (1) nach einem der vorangehenden Ansprüche, **dadurch gekennzeichnet, dass**
a) die Abstandsvorrichtung (6, 6', 60, 61, 60b, 61b, 90, 91) bezüglich einer beiden Haltemitteln (2, 3) gemeinsamen Symmetrieebene (M) spiegelsymmetrisch ausgelegt ist und
b) insbesondere dass eine Separationsschraube (6, 60, 61) und/oder ein Führungsstift (90, 91) sowie eine zugehörige Gewindebohrung (33) und/oder eine zugehörige Führungsbohrung (24, 34) in zentraler Position oder in paarweise spiegelsymmetrischen Positionen zu der Symmetrieebene (M) angeordnet sind.

11. Dentalgerät (1) nach einem der vorangehenden Ansprüche, **dadurch gekennzeichnet, dass**
a) das Dentalgerät (1), insbesondere die Interdentalmatrizen (4, 5), aus Stahl, Kunststoff und/oder Verbundwerkstoffen auf Kohlenfaserbasis besteht oder bestehen und/oder
b) das Dentalgerät (1) keine scharfen Kanten aufweist und sterilisierbar ist und/oder
c) Schrauben (6, 6', 60, 61, 40, 41, 50, 51) des Dentalgeräts (1) Imbusschrauben sind.

## Claims

1. Dental device (1) for an enlarging an approximal space (7, 8) between teeth (110, 111, 112), whereby the dental device includes
two retaining means (2, 3) adapted for a retaining of interdental matrices (4, 5) and
a spacer device (6, 6', 60, 61, 60b, 61b, 90, 91) adapted to push the retaining means (2, 3) apart and to guide same parallel,
**characterized in that** the dental device comprises two interdental matrices (4, 5) adapted for a insertion into approximal spaces (7, 8),
and **in that** a distance between the interdental matrices (4, 5) in a range between at least one tooth length (L) upto a spread length (L') larger than one tooth length (L) can be set at the spacer device (6, 6', 60, 61, 60b, 61b, 90, 91).

2. Dental device (1) according to claim 1, **characterized in that**
a) the interdental matrices (4, 5) are releasably mounted to the retaining means (2, 3) and/or
b) at least one interdental matrice (4, 5) comprises a window (9), specifically a plastic material window (9) or a opening (9).

3. Dental device (1) according to one of the preceding claims, **characterized in that**
a) at least one interdental matrice (5) includes two partial matrices (5a, 5b),
b) a first partial matrice (5a) is held on a retaining means (3),
c) a second partial matrice (5b) is held on the first partial matrice (5a) and
d) specifically both partial matrices (5a, 5b) include a window (9) common to both.

4. Dental device (1) according to one of the preceding claims, **characterized in that**
a) at least one of the retaining means (2, 3) is a U-shaped carrier (2, 3) which comprises a base (22, 32) and two side portions with mounting means (20, 21, 30, 31, 40, 41, 50, 51; 38, 39) for the interdental matrices (4, 5) and
b) specifically the base (22, 32) comprises a resting surface (25, 35) for a bottom edge located supporting of the interdental matrices (4, 5) and/or the base (22, 32) comprises a projection (26, 36) for a front or back sided supporting of the interdental matrices (4, 5) against a bending when the retaining means (2, 3) are being pushed apart.

5. Dental device (1) according to claim 4, **characterized in that**
a) the mounting means (20, 21, 30, 31, 40, 41, 50, 51) are clamping jaws (20, 21, 30, 31) with locking screws (40, 41, 50, 51) adapted to engage perforations of the interdental matrices (4, 5) and
b) specifically the U-shaped carrier (2, 3) consists of two U-shaped partial carriers (2a, 2b, 3a, 3b) of which the side portions form the clamping jaws (20, 21, 30, 31).

6. Dental device (1) according to claim 4, **characterized in that**
a) the side portions comprise as mounting means sliding-in slots (38, 39) for the interdental matrices (4, 5),
b) specifically the interdental matrices (5) comprise at two opposite edges thickened areas (52, 53) for insertion into the sliding-in slots (38, 39)
c) specifically the sliding-in slots (38, 39) comprise snap locks.

7. Dental device (1) according to one of the preceding claims, **characterized in that**
a) the spacer device (6, 6', 60, 61, 60b, 61b, 90, 91) comprises at least one separator screw (6, 6', 60, 61) and at least one guide pin (60b, 61b, 90, 91) and
b) the retaining means (2, 3) comprise at least one threaded bore (33) for the separator screw (6, 6', 60, 61) and at least one guide bore (24, 34) for the guiding pin (60b, 61b, 90, 91).

8. Dental device (1) according to claim 7, **characterized in that**
a) the spacer device (60, 61, 60b, 61b) comprises two separator screws (60, 61) each of which integrally connected at one end to a guide pin (60b, 61b) and
b) a first of the retaining means (3) comprises two threaded bores (33) for the separator screws (60, 61) and a second of the retaining means (2) comprises two guide bores (24) for the guide pins (60b, 61b).

9. Dental device (1) according to claim 7, **characterized in that**
a) the spacer device (6, 6', 90, 91) comprises exactly one separator screw (6; 6') and two guiding pins (90, 91) or
b) the spacer device (6, 6', 60', 61, 90, 91) comprises two separator screws (60, 61; 6, 6') and exactly one guiding pin (90; 91).

10. Dental device (1) according to one of the preceding claims, **characterized in that**
a) the spacer device (6, 6', 60, 61, 60b, 61b, 90, 91) is designed mirror symmetrically with reference to a plane of symmetry (M) common to one of the retaining means (2, 3) and
b) that specifically one separator screw (6, 60, 61) and/or one guiding pin (90, 91) and a corresponding threaded bore (33) as well, and/or a corresponding guiding bore (24, 34) are located in a central position or in pair-wise mirror symmetrical positions relative to the axis of symmetry (M).

11. Dental device (1) according to one of the preceding claims, **characterized in that**
a) the dental device (1), specifically the interdental matrices (4, 5) consist(s) of steel, a plastic material and/or compound materials on a carbon fiber basis and/or
b) the dental device (1) is free of sharp edges and is sterilizable and/or
c) the screws (6, 6', 60, 61, 40, 41, 50, 51) of the dental device (1) are socket head cap screws.

## Revendications

1. Appareil dentaire (1) servant à l'élargissement d'un espace approximal (7, 8) entre les dents (110, 111, 112), l'appareil dentaire présentant
- deux moyens de maintien (2, 3) pour le maintien des matrices interdentaires (4, 5) et
- un dispositif d'écartement (6, 6', 60, 61, 60b, 61b, 90, 91) servant à écarter et à guider parallèlement les moyens de maintien (2, 3),
**caractérisé en ce qu'**il présente deux matrices interdentaires (4, 5) à introduire dans les espaces approximals (7, 8), et **en ce que**, sur le dispositif d'écartement, un écart entre les matrices interdentaires (4, 5) est réglable dans une plage allant au moins d'une longueur de dent (L) à une longueur d'écartement (L') supérieure à une longueur de dent (L).

2. Appareil dentaire (1) selon la revendication 1, **caractérisé en ce que**
a) les matrices interdentaires (4, 5) sont fixées de manière amovible aux moyens de maintien (2, 3) et/ou
b) au moins une matrice interdentaire (4, 5) présente une fenêtre (9), en particulier une fenêtre en matière artificielle (9) ou une ouverture (9).

3. Appareil dentaire (1) selon l'une des revendications précédentes, **caractérisé en ce que**
a) au moins une matrice interdentaire (5) comprend deux matrices partielles (5a, 5b),
b) une première matrice partielle (5a) est fixée à un moyen de maintien (3),
c) une seconde matrice partielle (5b) est maintenue à la première matrice partielle (5a) et
d) en particulier, les deux matrices partielles (5a, 5b) présentent une fenêtre commune (9).

4. Appareil dentaire (1) selon l'une des revendications précédentes, **caractérisé en ce que**
a) au moins un des moyens de maintien (2, 3) est un support en forme de U (2, 3) qui comprend une base (22, 32) et deux éléments latéraux avec des moyens de fixation (20, 21, 30, 31, 40, 41, 50, 51, 38, 39) pour les matrices interdentaires (4, 5) et
b) en particulier, la base (22, 32) présente une surface d'appui (25, 35) pour un appui inférieur, côté bord, des matrices interdentaires (4, 5) et/ou que la base (22, 32) présente une saillie (26, 36) pour soutenir les matrices interdentaires (4, 5) côté avant ou côté arrière contre une déformation lors de l'écartement des moyens de maintien (2, 3).

5. Appareil dentaire (1) selon la revendication 4, **caractérisé en ce que**
a) les moyens de fixation (20, 21, 30, 31, 40, 41, 50, 51) sont des mâchoires de serrage (20, 21, 30, 31) avec des vis de fixation (40, 41, 50, 51) destinées à s'engrener dans des perforations des matrices interdentaires (4, 5) et
b) en particulier, le support en forme de U (2, 3) est constitué de deux supports partiels en forme de U (2a, 2b, 3a, 3b), dont les éléments latéraux forment les mâchoires de serrage (20, 21, 30, 31).

6. Appareil dentaire (1) selon la revendication 4, **caractérisé en ce que**
a) les éléments latéraux présentent comme moyens de fixation (38, 39) des fentes d'insertion (38, 39) pour les matrices interdentaires (4, 5),
b) en particulier, les matrices interdentaires (5) présentent des épaississements (52, 53) destinés à être insérés dans les fentes d'insertion (38, 39) et
c) en particulier, les fentes d'insertion (38, 39) présentent des fermetures à ressort.

7. Appareil dentaire (1) selon l'une des revendications précédentes, **caractérisé en ce que**
a) le dispositif d'écartement (6, 6', 60, 61, 60b, 61b, 90, 91) comprend au moins une vis de séparation (6, 6', 60b, 61b, 90, 91) et au moins un ergot de guidage (60b, 61b, 90, 91) et
b) les moyens de maintien (2, 3) présentent au moins un trou taraudé (33) pour la vis de séparation (6, 6', 60, 61) et au moins un trou de guidage (24, 34) pour l'ergot de guidage (60b, 61b, 90, 91).

8. Appareil dentaire (1) selon la revendication 7, **caractérisé en ce que**
a) le dispositif d'écartement (60, 61, 60b, 61b) comprend deux vis de séparation (60, 61), qui sont reliées, côté extrémité, à un ergot de guidage (60b, 61b) respectivement et
b) un premier moyen de maintien (3) présente deux trous taraudés (33) pour les vis de séparation (60, 61) et un second moyen de maintien (2) présente deux trous de guidage (24) pour les ergots de guidage (60b, 61b).

9. Appareil dentaire (1) selon la revendication 7, **caractérisé en ce que**
a) le dispositif d'écartement (6, 6', 90, 91) comprend précisément une vis de séparation (6 ; 6') et deux ergots de guidage (90, 91) ou
b) le dispositif d'écartement (6, 6', 60, 61, 90, 91) comprend deux vis de séparation (60, 61 ; 6, 6') et précisément un ergot de guidage (90 ; 91).

10. Appareil dentaire (1) selon l'une des revendications précédentes, **caractérisé en ce que**
a) le dispositif d'écartement (6, 6', 60, 61, 60b, 61b, 90, 91) est conçu symétrique par rapport à un plan de symétrie (M) commun et
b) en particulier, une vis de séparation (6, 60, 61) et/ou un ergot de guidage (90, 91), ainsi qu'un trou taraudé associé (33) et/ou un trou de guidage associé (24, 34) sont disposés en position centrale ou par paires dans des positions symétriques par rapport au plan de symétrie (M).

11. Appareil dentaire (1) selon l'une des revendications précédentes, **caractérisé en ce que**
a) l'appareil dentaire (1), en particulier les matrices interdentaires (4, 5), sont en acier, en matière artificielle et/ou en matière composite à base de fibres de carbone et/ou
b) l'appareil dentaire (1) ne présente pas d'arêtes tranchantes et qu'il peut être stérilisé et/ou
c) les vis (6, 6', 60, 61, 40, 41, 50, 51) de l'appareil dentaire (1) sont des vis à six pans creux.
